# EUROPÄISCHE PATENTSCHRIFT

(11) **EP 2 167 254 B1**
(45) Veröffentlichungstag und Bekanntmachung des Hinweises auf die Patenterteilung: **16.07.2014**
(21) Anmeldenummer: 08749780.6
(22) Anmeldetag: 28.04.2008
(51) Int. Cl.: B21D 22/16, B21D 53/26, F16H 55/44

(54) **VERFAHREN ZUR HERSTELLUNG EINER NABE IM DRÜCKVERFAHREN MITTELS WENIGSTENS EINER DREHBAREN DRÜCKROLLE**
METHOD FOR THE PRODUCTION OF A HUB IN A PRESSING PROCESS BY MEANS OF AT LEAST ONE ROTATABLE PRESSING ROLL
PROCÉDÉ DE FABRICATION D'UN MOYEU SELON UN PROCÉDÉ D'EMBOUTISSAGE AU MOYEN D'AU MOINS UN CYLINDRE D'EMBOUTISSAGE ROTATIF

(30) Priorität: 23.05.2007 DE 102007023972
(43) Veröffentlichungstag der Anmeldung: 31.03.2010
(73) Patentinhaber: WF Maschinenbau- und Blechformtechnik GmbH & Co. KG, 48324 Sendenhorst (DE)
(72) Erfinder: FRIESE, Udo, 59227 Ahlen (DE); OHLSCHER, Heiko, 48324 Sendenhorst (DE)
(74) Vertreter: Dantz, Jan Henning
(86) Internationale Anmeldenummer: PCT/EP2008/055152
(87) Internationale Veröffentlichungsnummer: WO 2008/141896

(56) Entgegenhaltungen:
- EP-A- 0 824 049
- EP-B- 0 725 693
- EP-B- 1 263 539
- DE-C1- 4 444 526
- JP-A- 2000 153 312

## Beschreibung

Die Erfindung betrifft ein Verfahren nach dem Oberbegriff des Anspruchs 1 und ein nach diesem Verfahren hergestelltes Bauteil.

Das grundlegende Verfahren zur Herstellung einer Nabe im Drückverfahren mittels wenigstens einer drehbaren Drückrolle ist in der EP 0 725 693 B1 patentiert. Dieses Verfahren findet seine Weiterentwicklung in der DE 44 44 526 C1, nach deren Lehre lediglich die äußere Umfangskante der Blechplatine während des Drückverfahrens dadurch abgestützt wird, dass sich ein Widerlagerfutter abstützend gegen die Unfangskante der Metallronde anlegt.

Aus der US 5,951,44 ist es ferner bekannt, bei Naben von Riemenscheiben dadurch ein Stufenloch bzw. ein so genanntes "blind hole" auszubilden, dass ein gestufter Vorsetzer eine Durchgangsbohrung derart durchsetzt, dass eine Kante/Ringfläche des Vorsetzers, der am Außenumfang der im Widerlagerfutter gehaltenen Metallronde, auf der Metallronde aufliegt und der die Durchgangsbohrung der Metallronde durchsetzende Abschnitt des Vorsetzers einen Innendurchmesser aufweist, welcher dem der Metallronde entspricht. Hierdurch bleibt beim Ausbilden der Nabe ein innerer Steg an der Nabe stehen, so dass sich das Stufenloch ausbildet, welches in manchen Anwendungsfällen entweder konstruktiv notwendig ist oder aber abgedreht werden kann, beispielsweise, um den Kanten der Innenkontur eine besondere Form zu geben. Die Stufenlochgeometrie der Nabe nach dem Drücken entspricht stets der Dicke der Metallronde in diesem Bereich vor dem Ausformen der Nabe.

Nach der gattungsbildenden EP 1 263 539 B1 wird am Innenumfang der Nabe ein sich von der Nabe im wesentlichen nach innen erstreckender Materialsteg dadurch ausgebildet, dass beim Ausformen der Nabe zumindest ein Abschnitt eines Vorsetzers beabstandet zur Metallronde angeordnet wird, so dass beim Ausbilden der Nabe Material der Metallronde in den Bereich zwischen der Metallronde und dem Vorsetzer fließt und derart das Stufenloch formt.

Ausgehend von diesem Stand der Technik ist es die Aufgabe der Erfindung, das gattungsgemäße Verfahren derart weiterzuentwickeln, dass ihm neue Anwendungsmöglichkeiten erschlossen werden.

Die Erfindung erreicht dieses Ziel durch den Gegenstand des Anspruchs 1.

Derart wird es auf einfache Weise möglich, Getriebeteil zu realisieren, deren Nabe aus einem inneren Formteil und einem äußeren angerollten Nabenabschnitt besteht. Das Formteil kann aus einem anderen Material - so aus einem härteren Material - als die Blechplatine bestehen, aus welcher der äußere Nabenabschnitt gedrückt wird. Zudem sind hinsichtlich der axialen Länge der Nabe keine Grenzen gesetzt, da das Formteil ggf. sogar als Abschnitt eines Rohres ausgebildet sein und eine sehr große axiale Länge aufweise kann.

Vorteilhafte Ausgestaltungen der Erfindung sind den Unteransprüchen zu entnehmen.

Nachfolgend wird die Erfindung unter Bezug auf die Zeichnung anhand von Ausführungsbeispielen näher beschrieben. Es zeigen:
- Fig. 1a -c: drei schematisch und schnittartig dargestellte, aufeinander folgende Bearbeitungsphasen bei der Herstellung eines Getriebeteils nach einem ersten Ausführungsbeispiel eines erfindungsgemäßen Verfahrens zur Herstellung einer Nabe;
- Fig. 2: eine Ausschnittsvergrößerung aus Fig. 1; d;
- Fig. 3-17: teilgeschnittene Darstellungen weiterer Ausführungsbeispiele von nach dem erfindungsgemäßen Verfahren hergestellten Bauteilen.

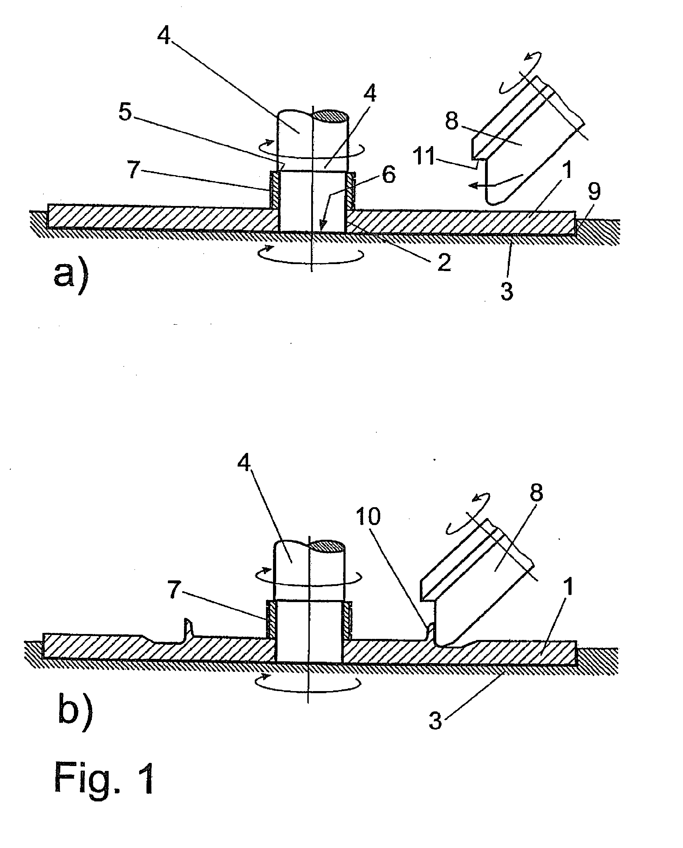

In den Fig. 1 bis 3 liegt eine scheibenartige Metallronde (Blechplatine) 1 mit einer Durchgangsöffnung 2 auf einem um eine Drehachse z drehbaren Werkzeug 3 auf.

Die Durchgangsöffnung 2 durchsetzt ein hier gestuft ausgebildeter Vorsetzer 4 (Stufung 5), dessen die Durchgangsöffnung 2 durchsetzendes Vorsetzerende 6 auf dem Werkzeug 3 aufliegt.

Auf der von Werkzeug 3 abgewandten Seite der Metallronde 2 ist auf diese ein einzurollendes Formteil- hier eine Buchse 7 - aufgesetzt, deren Innendurchmesser dem Innendurchmesser der Durchgangsöffnung entspricht. Dieses Formteil kann auch vorab an der Metallronde auf beliebige Art befestigt sein.

Mit der Stufung 5 des Vorsetzers 4 wird das Formteil 7 auf der Metallronde 2 festgelegt.

Sodann wird - vorzugsweise ohne Wärmezufuhr mittels Kaltverformung - im Drückverfahren wenigstens eine drehbare Drückrolle 8 von der dem Werkzeug 3 gegenüber liegenden Seite her axial in die Metallronde 2 eingetaucht und dann vorzugsweise radial nach innen zur Drehachse z hin zugestellt.

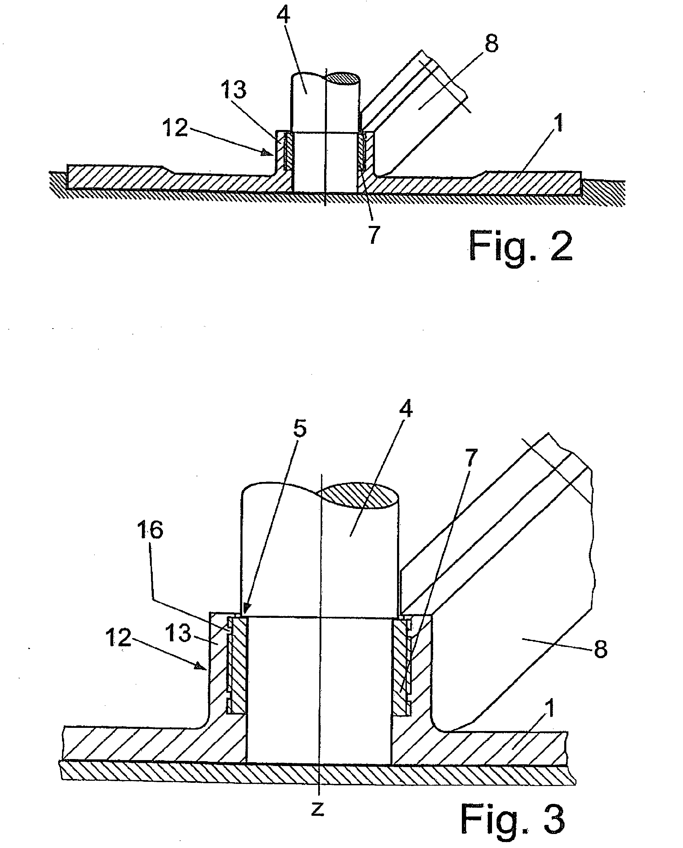

Hierdurch wird zunächst die Metallronde 1 etwas radial aufgeweitet, so dass Material von innen gegen einen widerlagerartigen Ringabschnitt 9 am Werkzeug 3 fließt. Beim weiteren radialen Zustellen der Drückrolle 8 nach innen staut sich vor der Drückrolle 8 Rondenmaterial 10 auf, das mit fortschreitendes Bewegung der Drückrolle 8 schließlich radial nach innen gegen das Formteil 7 gedrückt wird, an dem es axial bis zu einem gestuften Absatz 11 an der Drückrolle 8 läuft, wobei der Absatz 11 derart angeordnet ist, dass auch Rondenmaterial zwischen den Raum zwischen dem Absatz 11 und das von der Metallronde abgewandt liegenden Ende des Formteils 7 fließt, so dass das Formteil 7 auf einfache Weise (siehe auch Fig. 3) axial in beiden axialen Richtungen an der nunmehr umgeformten Metallronde 1 mit dem Nabenabschnitt 13 gesichert ist. Die Metallronde kann in ihrem übrigen Bereich beliebig weiter bearbeitet werden, so zu einer Riemenscheibe und/oder zu einem sonstigen beliebigen Getriebeteil.

Derart wird auf einfache Weise ein rotationssymmetrisches Getriebeteil (Siehe Fig. 2) mit einer Nabe 12 geschaffen, die innen aus dem Formteil 7 und außen aus einem angerolltem Nabenabschnitt 13 aus dem angerollten Material der Metallronde 1 besteht.

Da das Formteil 7 aus einem anderen Material als dem Rondenmaterial bestehen kann, so aus einem relativ zum Rondematerial härteren Material, wird ein Getriebeteil geschaffen, dessen Nabe auch aus einem Material wie einem Hartmetall oder einer Keramik bestehen kann, welches nicht im Drückverfahren mit einer Drückrolle umformbar ist.

Das Formteil 7 ist nach Fig. 3 als Buchse ausgebildet, welche an ihrem Innenumfang und an ihrem Außenumfang zylindrisch ausgebildet ist.

Der Begriff der Nabe ist nicht zu eng zu fassen. Insbesondere kann das Formteil auch länger sein als der angeformte äußere Nabenabschnitt.

Nach Fig. 1 bis 9 ist das Formteil 7 so bemessen, dass es vor dem Einrollen mit einem seiner Enden auf der Metallronde 1 aufliegt. Axial ist das Formteil 7 kürzer als das der angerollte Nabenabschnitt 13 bzw. dass angerollte Nabenmaterial.

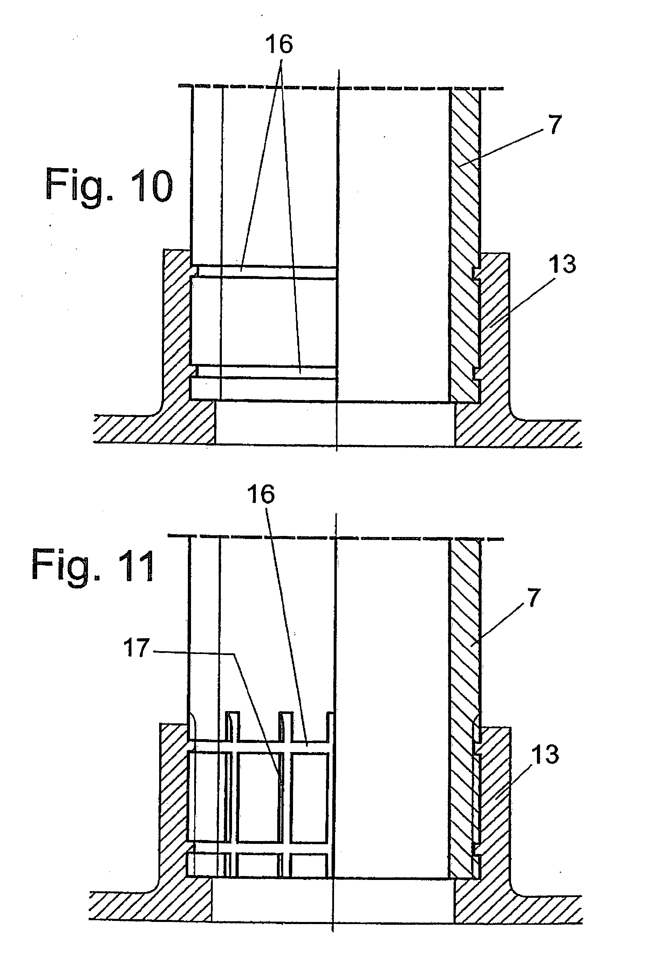

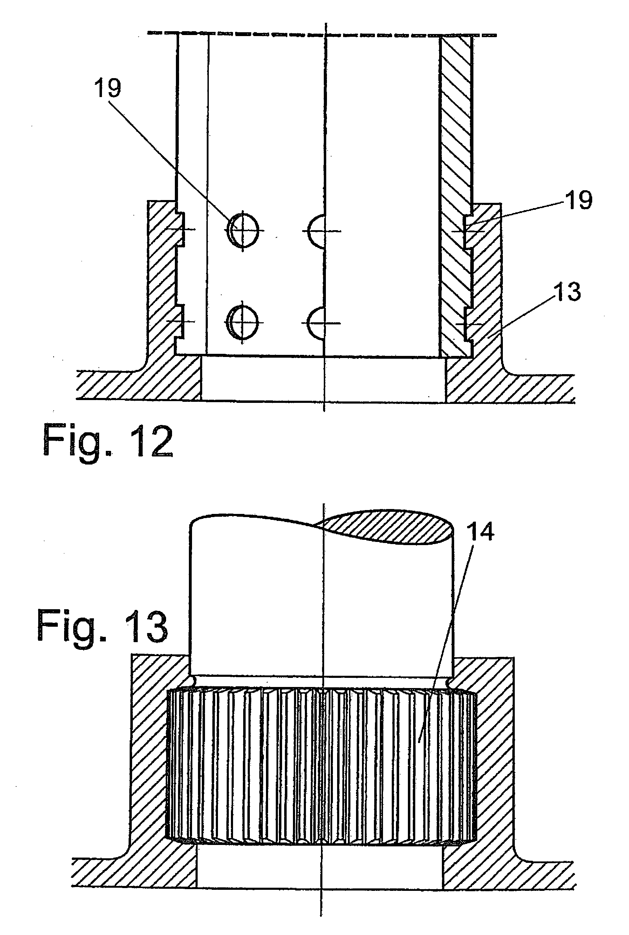

Auch nach Fig. 10 bis 13 ist das Formteil so bemessen, dass es vor dem Einrollen mit einem seiner Enden auf der Metallronde 1 aufliegt. Das Formteil 7 ist hier aber länger als der an seinen Außenumfang angerollte Nabenabschnitt 13, so dass es axial über das Ende des Nabenabschnittes 13 vorsteht. Dies ermöglicht auf einfache Weise das Fertigen von Getriebeteilen mit sehr langen axialen Naben.

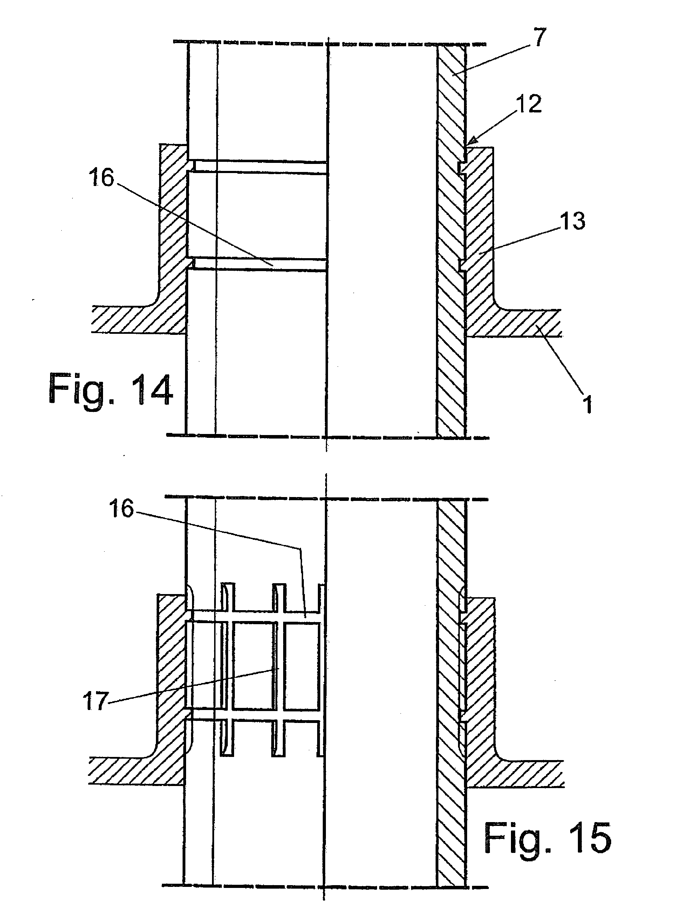

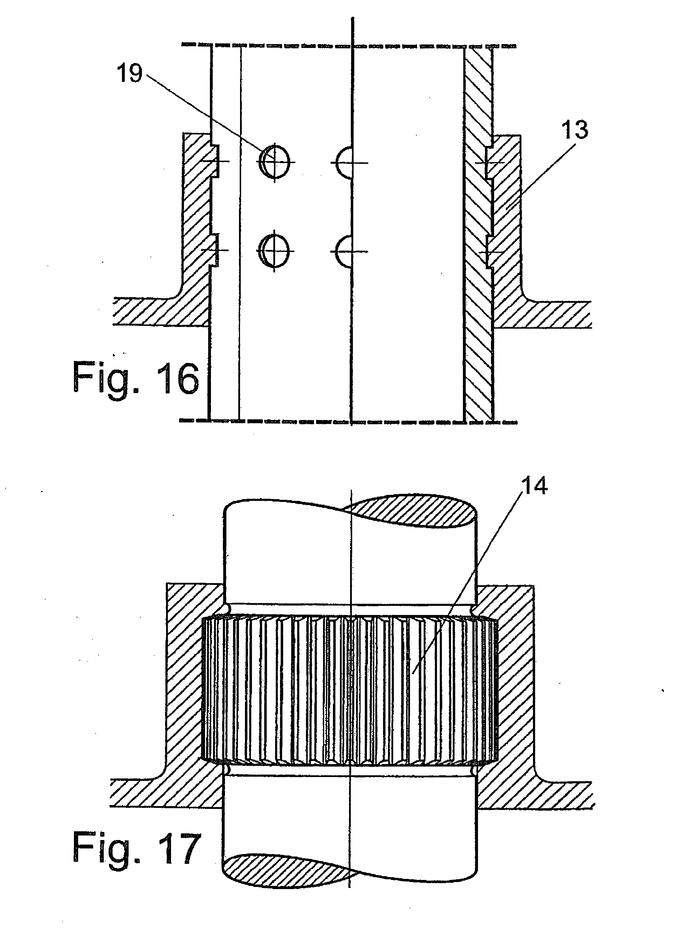

Nach Fig. 14 bis 17 ist das Formteil 7 als rohrartiger Abschnitt ausgestaltet, welches bereits vor dem Anrollen der Nabe die Metallronde 1 vollständig durchsetzt. Hier ist die Durchgangsbohrung der Metallronde 1 entsprechend zu bemessen und das Werkzeug 3 ist mit einem Aufnahmebereich für den rohrartigen Abschnitt zu versehen.

Es ist denkbar, das Formteil 7 mit einer Konturierung zu versehen, in welche beim Andrücken des äußeren Nabenabschnittes 3 Material der Metallronde 1 fließt, welche das Formteil 7 zusätzlich axial und/oder in Umfangsrichtung an der Metallronde 1 sichert.

Die Konturierung weist nach Fig. 1, 2, 5, 7, 11, 14 und 15 Ringnuten 16 im Außenmantel des Formteils 7 auf, was eine zusätzliche axiale Sicherung der Formteils 7 an dem angerollten Nabenabschnitt 13 bedeutet.

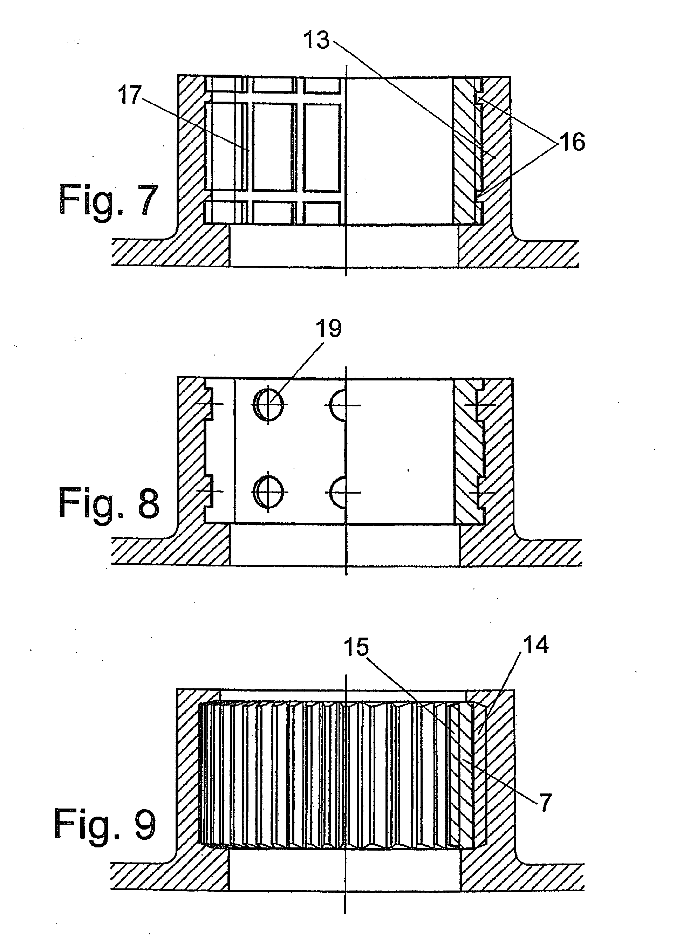

Nach Fig. 7, 11 und 15 weist die Konturierung die Ringnuten 16 und ergänzend axiale verlaufende Nuten 17 im Außenmantel des Formteils 7 auf, was eine zusätzliche Verdrehsicherung der Formteile 7 an den jeweils an sie angerollten Nabenabschnitten 13 realisiert.

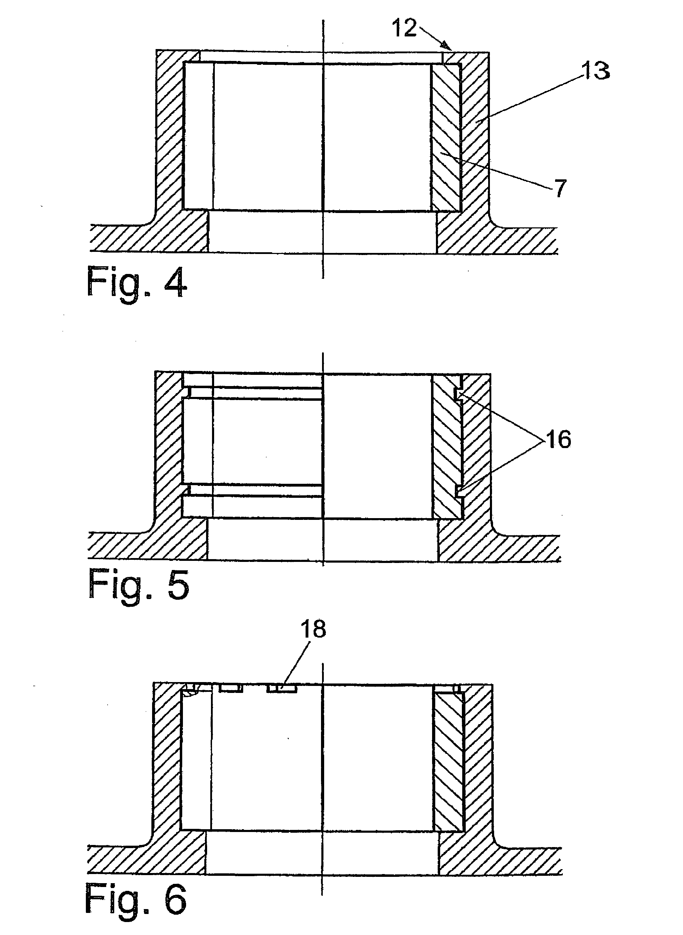

Nach Fig. 6, 8, 12 und 16 weist die Konturierung Aussparungen 18 oder Bohrungen, insbesondere Sacklöcher 19 im Außenmantel des Formteils 7 auf, in welche der angerollte Nabenabschnitt 13 jeweils mit Material eingreift, was eine zusätzliche axiale Sicherung und eine Verdrehsicherung des Formteils 7 an dem angerollten Nabenabschnitt 13 bedeutet.

Das Formteil 7 kann an seinem Außenumfang auch mit einer Außenverzahnung 14 versehen werden, die es axial und gegen Verdrehungen sichert (Fig. 9, 13, 17).

Optional kann das Formteil 7 auch mit einer Innenverzahnung 15 versehen werden, so dass ein innenverzahntes Getriebeteil geschaffen wird.

Es ist auch denkbar, ein mit einer Innenverzahnung 15 und einer Außenverzahnung 14 versehenes Formteil in die Nabe einzurollen (Fig. 9).

Das Verfahren zu Herstellung der Nabe mit Formteil ist in den Fig. 1 bis 14 im Wesentlichen gleich.

### Bezugszeichen

| | |
|---|---|
| Metallronde (Blechplatine) | 1 |
| Durchgangsöffnung | 2 |
| Drehachse | z |
| Werkzeug | 3 |
| Vorsetzer | 4 |
| Stufung | 5 |
| Vorsetzerende | 6 |
| Formteil | 7 |
| Drückrolle | 8 |
| Ring | 9 |
| Rondenmaterial | 10 |
| Absatz | 11 |
| Nabe | 12 |
| angerollter Nabenabschnitt | 13 |
| Außenverzahnung | 14 |
| Innenverzahnung | 15 |
| Ringnuten | 16 |
| Nuten | 17 |
| Aussparungen | 18 |
| Sacklöcher | 19 |

## Patentansprüche

1. Verfahren zur spanlosen Herstellung eines Bauteils - insbesondere eines Getriebebauteils - mit einer Nabe (12), bei dem aus einer rotierenden Metallronde (1) mit einer Durchgangsöffnung (2) eine sich im wesentlichen radial zur Metallrondenebene erstreckende Nabe (12) mittels mindestens einer rotierenden Drückrolle (8) ausgeformt wird, wobei die Drückrolle (8) zumindest zeit- und abschnittsweise in die Metallronde eintauchend radial von außen nach innen zugestellt wird, **dadurch gekennzeichnet, dass** das Rondenmaterial (10) aus der Metallronde gegen ein Formteil (7) gedrückt wird, so dass eine Nabe (12) mit dem Formteil (7) als innerer Abschnitt und mit einem an das Formteil (7) angedrückten äußeren Nabenabschnitt (13) aus Material der Metallronde (1) gebildet wird.

2. Verfahren nach Anspruch 1, **dadurch gekennzeichnet, dass** das Formteil (7) mittels eines Vorsetzers an der Metallronde (1) festgelegt wird.

3. Verfahren nach einem der vorstehenden Ansprüche, **dadurch gekennzeichnet, dass** sich bei einem radialen Zustellen der Drückrolle (8) vor der Drückrolle (8) das Rondenmaterial (10) aufstaut, das mit fortschreitendes Bewegung der Drückrolle radial nach innen als angerollter Nabenabschnitt (13) gegen das Formteil (7) gedrückt wird, an dem es axial bis zu einem gestuften Absatz (11) an der Drückrolle (8) läuft.

4. Verfahren nach einem der vorstehenden Ansprüche, **dadurch gekennzeichnet, dass** der Absatz (11) derart angeordnet ist, dass ein Teil des Rondenmaterials (10) zwischen den Raum zwischen dem Absatz (11) und das von der Metallronde (1) abgewandt liegenden Ende des Formteils (7) fließt, so dass das Formteil (7) axial in beiden axialen Richtungen an der Metallronde (1) gesichert ist.

5. Verfahren nach einem der vorstehenden Ansprüche, **dadurch gekennzeichnet, dass** das Formteil (7) aus einem anderen Material als die Metallronde (1) besteht.

6. Verfahren nach einem der vorstehenden Ansprüche, **dadurch gekennzeichnet, dass** das Formteil (7) aus einem härteren Material als die Metallronde (1) besteht und/oder dass das Formteil (7) aus einer Keramik besteht.

7. Verfahren nach einem der vorstehenden Ansprüche, **dadurch gekennzeichnet, dass** die Nabe (12) derart ausgestaltet wird, dass das Formteil (7) axial über den angerollten Nabenabschnitt (13) vorsteht und/oder dass das Formteil (7) die Metallronde und den daran angerollten Nabenabschnitt (13) vollständig durchsetzt.

8. Verfahren nach einem der vorstehenden Ansprüche, **dadurch gekennzeichnet, dass** die Nabe (12) derart ausgestaltet wird, dass das Formteil (7) beidseits axial über die Metallronde und den daran angerollten Nabenabschnitt (13) vorsteht.

9. Verfahren nach einem der vorstehenden Ansprüche, **dadurch gekennzeichnet, dass** das Formteil (7) als Buchse ausgebildet ist, welche an ihrem Innenumfang und an ihrem Außenumfang zylindrisch ausgebildet ist und/oder dass das Formteil (7) als Rohrabschnitt ausgebildet ist, welches an seinem Innenumfang und an ihrem Außenumfang zylindrisch ausgebildet ist.

10. Verfahren nach einem der vorstehenden Ansprüche, **dadurch gekennzeichnet, dass** das Formteil (7) so bemessen wird, dass es vor dem Einrollen mit einem seiner Enden auf der Metallronde (1) aufliegt und/oder dass das Formteil (7) kürzer als das der angerollte Nabenabschnitt (13) ist.

11. Verfahren nach einem der vorstehenden Ansprüche, **dadurch gekennzeichnet, dass** das das Formteil (7) mit einer Konturierung versehen wird, in welche beim Andrücken des äußeren Nabenabschnittes (13) Material der Metallronde (1) fließt, welches das Formteil (7) zusätzlich insbesondere axial und/oder in Umfangsrichtung an dem äußeren Nabenabschnitt (13) sichert und/oder dass die Konturierung Ringnuten (16) im Außenmantel des Formteils (7) aufweist, in welche Rondenmaterial des Nabenabschnitts (13) eingedrückt wird.

12. Verfahren nach einem der vorstehenden Ansprüche, **dadurch gekennzeichnet, dass** das die Konturierung axiale Nuten (17) im Außenmantel des Formteils (7) aufweist, in welche Rondenmaterial des Nabenabschnitts (13) eingedrückt wird und/oder dass die Konturierung Aussparungen (18) im Außenmantel des Formteils (7) aufweist, in welche Rondenmaterial des Nabenabschnitts (13) eingedrückt wird und/oder dass die Konturierung Bohnmgen im Außenmantel des Formteils (7) aufweist, in welche Rondenmaterial des Nabenabschnitts (13) eingedrückt wird.

13. Verfahren nach einem der vorstehenden Ansprüche, **dadurch gekennzeichnet, dass** die Konturierung Schlitze im Außenmantel des Formteils (7) aufweist, in welche Rondenmaterial des Nabenabschnitts (13) eingedrückt wird und/oder dass die Konturierung Sacklöcher (19) im Außenmantel des Formteils (7) aufweist, in welche Rondenmaterial des Nabenabschnitts (13) eingedrückt wird.

14. Verfahren nach einem der vorstehenden Ansprüche, **dadurch gekennzeichnet, dass** die Konturierung eine Außenverzahnung (14) im Außenmantel des Formteils (7) aufweist, in welche Rondenmaterial des Nabenabschnitts (13) eingedrückt wird und/oder dass das Formteil eine Innenverzahnung (15) aufweist

15. Getriebeteil, insbesondere hergestellt nach einem der vorstehenden Ansprüche, **gekennzeichnet durch** eine Nabe (12) mit einem Formteil (7) als innerem Nabenabschnitt und einem daran angedrückten äußeren Nabenabschnitt (13) aus Rondenmaterial einer Metallronde (1).

## Claims

1. A method for the non-cutting production of a component, especially a transmission component, having a hub (12), in which a hub (12) extending substantially radially to the plane of the circular metal blank is formed by means at least one rotating pressing roll (8) from a rotating circular metal blank (1) with a through-opening (2), wherein the pressing roll (8) is advanced radially from the outside to the inside to immerse into the circular metal blank at least temporarily and in sections, **characterized in that** the circular blank material (10) is pressed from the circular metal blank against a mould (7) in such a way that a hub (12) is formed with the mould (7) as the inner section and with an outer hub section (13) made of material of the circular metal blank (1) that is pressed against the mould (7).

2. A method according to claim 1, **characterized in that** the mould (7) is fixed to the circular metal blank (1) by means of a patch block.

3. A method according to one of the preceding claims, **characterized in that** the circular blank material (10) accumulates in front of the pressing roll (8) during radial advancement of the press roll (8), which with progressing movement of the pressing roll is pressed radially to the inside as a roller-formed hub section (13) against the mould (7) on which it runs axially up to a stepped shoulder (11) on the pressing roll (8).

4. A method according to one of the preceding claims, **characterized in that** the shoulder (11) is arranged in such a way that a portion of the blank circular material (10) flows between the space between the shoulder (11) and the end of the mould (7) situated away from the circular metal blank (1), so that the mould (7) is secured axially in both axial directions on the circular metal blank (1).

5. A method according to one of the preceding claims, **characterized in that** the mould (7) consists of a different material than the circular metal blank (1).

6. A method according to one of the preceding claims, **characterized in that** the mould (7) consists of a harder material than the circular metal blank (1), and/or that the mould (7) consists of a ceramic material.

7. A method according to one of the preceding claims, **characterized in that** the hub (12) is arranged in such a way that the mould (7) protrudes axially beyond the roller-formed hub section (13), and/or that the mould (7) completely penetrates the circular metal blank and the hub section (13) roller-formed thereon.

8. A method according to one of the preceding claims, **characterized in that** the hub (12) is arranged in such a way that the mould (7) axially protrudes on both sides beyond the circular metal blank and the hub section (13) that is roller-formed thereon.

9. A method according to one of the preceding claims, **characterized in that** the mould (7) is arranged as a bushing, which is cylindrically arranged on its inner circumference and on its outer circumference, and/or that the mould (7) is arranged as a tubular section which is cylindrically arranged on its inner circumference and its outer circumference.

10. A method according to one of the preceding claims, **characterized in that** the mould (7) is dimensioned in such a way that prior to rolling up it rests with one of its ends on the circular metal blank (1), and/or that the mould (7) is shorter than the roller-formed hub section (13).

11. A method according to one of the preceding claims, **characterized in that** the mould (7) is provided with a contouring in which material of the circular metal blank (1) flows during pressing on of the outer hub section (13), which material additionally secures the mould (7) especially axially and/or in the circumferential direction on the outer hub section (13), and/or that the contouring comprises annular grooves (16) in the outer jacket of the mould (7) into which the circular blank material of the hub section (13) is pressed.

12. A method according to one of the preceding claims, **characterized in that** the contouring comprises axial grooves (17) in the outer jacket of the mould (7), into which circular blank material of the hub section (13) is pressed, and/or that the contouring comprises recesses (18) in the outer jacket of the mould (7), into which circular blank material of the hub section (13) is pressed, and/or the contouring comprises boreholes in the outer jacket of the mould (7), into which circular blank material of the hub section (13) is pressed.

13. A method according to one of the preceding claims, **characterized in that** the contouring comprises slits in the outer jacket of the mould (7), into which circular blank material of the hub section (13) is pressed, and/or that the contouring comprises pocket holes (19) in the outer jacket of the mould (7), into which circular blank material of the hub section (13) is pressed.

14. A method according to one of the preceding claims, **characterized in that** the contouring comprises an outer toothing (14) in the outer jacket of the mould (7), into which circular blank material of the hub section (13) is pressed, and/or that the mould comprises an internal toothing (15).

15. A transmission part, especially produced according to one of the preceding claims, **characterized by** a hub (12) with a mould (7) as the inner hub section and an outer hub section (13) which is pressed thereon and is made of circular blank material of a circular metal blank (1).

## Revendications

1. Procédé de fabrication sans enlèvement de copeaux d'un composant, en particulier d'un élément d'engrenage, avec un moyeu (12), dans lequel un moyeu (12) s'étendant sensiblement radialement au plan du flanc métallique est moulé à partir d'un flan métallique (1) rotatif avec une ouverture de passage (2) à l'aide d'au moins un rouleau presseur (8) rotatif, le rouleau presseur (8) étant avancé au moins temporairement et par section de manière à pénétrer dans le flanc métallique radialement de l'extérieur vers l'intérieur, **caractérisé en ce que** le matériau (10) du flanc métallique est pressé contre une pièce moulée (7) de sorte qu'un moyeu (12) soit formé avec la pièce moulée (7) comme section intérieure et avec une section de moyeu (13) extérieure pressée contre la pièce moulée (7) en matériau du flanc métallique (1).

2. Procédé selon la revendication 1, **caractérisé en ce que** la pièce moulée (7) est fixée à l'aide d'un dispositif d'avance sur le flan métallique (1).

3. Procédé selon l'une quelconque des revendications précédentes, **caractérisé en ce que** le matériau de flanc (10) s'accumule en cas d'avance radiale du rouleau presseur (8) avant le rouleau presseur (8), lequel matériau est pressé avec un mouvement progressif du rouleau presseur radialement vers l'intérieur comme section de moyeu (13) roulée contre la pièce moulée (7), sur laquelle il tourne axialement jusqu'à un épaulement (11) étagé sur le rouleau presseur (8).

4. Procédé selon l'une quelconque des revendications précédentes, **caractérisé en ce que** l'épaulement (11) est disposé de telle manière qu'une partie du matériau de flanc (10) passe entre l'espace entre l'épaulement (11) et l'extrémité se trouvant éloignée du flanc métallique (1) de la pièce moulée (7) de sorte que la pièce moulée (7) soit bloquée axialement dans les deux directions axiales sur le flanc métallique (1).

5. Procédé selon l'une quelconque des revendications précédentes, **caractérisé en ce que** la pièce moulée (7) se compose d'un autre matériau que le flanc métallique (1).

6. Procédé selon l'une quelconque des revendications précédentes, **caractérisé en ce que** la pièce moulée (7) se compose d'un matériau plus dur que le flanc métallique (1) et/ou **en ce que** la pièce moulée (7) se compose d'une céramique.

7. Procédé selon l'une quelconque des revendications précédentes, **caractérisé en ce que** le moyeu (12) est configuré de telle manière que la pièce moulée (7) dépasse axialement de la section de moyeu (13) roulée et/ou que la pièce moulée traverse complètement le flanc métallique et la section de moyeu (13) roulée dessus.

8. Procédé selon l'une quelconque des revendications précédentes, **caractérisé en ce que** le moyeu (12) est configuré de telle manière que la pièce moulée (7) dépasse de part et d'autre axialement de la ronde métallique et de la section de moyeu (13) roulée dessus.

9. Procédé selon l'une quelconque des revendications précédentes, **caractérisé en ce que** la pièce moulée (7) est réalisée comme une douille qui est réalisée de manière cylindrique sur sa périphérie intérieure et sur sa périphérie extérieure et/ou **en ce que** la pièce moulée (7) est réalisée comme une section tubulaire qui est réalisée de manière cylindrique sur sa périphérie intérieure et sur sa périphérie extérieure.

10. Procédé selon l'une quelconque des revendications précédentes, **caractérisé en ce que** la pièce moulée (7) est dimensionnée de sorte à reposer avant le roulement avec une des ses extrémités sur le flanc métallique (1) et/ou en ce que la pièce moulée (7) est plus courte que celle de la section de moyeu roulée (13).

11. Procédé selon l'une quelconque des revendications précédentes, **caractérisé en ce que** la pièce moulée (7) est pourvue d'un contour, dans lequel lors du pressage de la section de moyeu extérieure (13), du matériau du flanc métallique (1) passe, lequel bloque en outre la pièce moulée (7) en particulier axialement et/ou dans le sens périphérique sur la section de moyeu extérieure (13) et/ou **en ce que** le contour présente des rainures annulaires (16) dans l'enveloppe extérieure de la pièce moulée (7), dans lesquelles du matériau de flanc de la section de moyeu (13) est enfoncé.

12. Procédé selon l'une quelconque des revendications précédentes, **caractérisé en ce que** le contour présente des rainures axiales (17) dans l'enveloppe extérieure de la pièce moulée (7), dans lesquelles du matériau de flanc de la section de moyeu (13) est enfoncé, et/ou **en ce que** le contour présente des évidements (18) dans l'enveloppe extérieure de la pièce moulée (7), dans lesquels du matériau de flanc de la section de moyeu (13) est enfoncé et/ou **en ce que** le contour présente des perçages dans l'enveloppe extérieure de la pièce moulée (7), dans lesquels du matériau de flanc de la section de moyeu (13) est enfoncé.

13. Procédé selon l'une quelconque des revendications précédentes, **caractérisé en ce que** le contour présente des fentes dans l'enveloppe extérieure de la pièce moulée (7), dans lesquelles du matériau de flanc de la section de moyeu (13) est enfoncé et/ou **en ce que** le contour présente des trous borgnes (19) dans l'enveloppe extérieure de la pièce moulée (7), dans lesquels du matériau de flanc de la section de moyeu (13) est enfoncé.

14. Procédé selon l'une quelconque des revendications précédentes, **caractérisé en ce que** le contour présente une denture extérieure (14) dans l'enveloppe extérieure de la pièce moulée (7), dans laquelle du matériau de flanc de la section de moyeu (13) est enfoncé et/ou **en ce que** la pièce moulée présente une denture intérieure (15).

15. Elément d'engrenage, en particulier fabriqué selon l'une quelconque des revendications précédentes, **caractérisé par** un moyeu (12) avec une pièce moulée (7) comme section de moyeu intérieure et une section de moyeu extérieure pressée dessus (13) en un matériau d'un flanc métallique (1).
